# EUROPEAN PATENT APPLICATION

(11) **EP 2 623 182 A1**
(43) Date of publication of application: **07.08.2013**
(21) Application number: 12154000.9
(22) Date of filing: 06.02.2012
(51) Int. Cl.: B01D 53/62, B01D 53/83, B01D 53/96, F23C 10/00, F23J 15/00, F24J 1/00

(54) **Integrated process and system for carbon dioxide emission capture**

(71) Applicant: Alstom Technology Ltd, 5400 Baden (CH)
(72) Inventor: Heinz, Gerhard, 73732 Esslingen (DE); Ajhar, Marc, 65193 Wiesbaden (DE)

(57) **Abstract**

A method and system are provided for reducing carbon dioxide (CO₂) emissions from flue gases. The method may include: transmitting the flue gases to a first reactor (2) where the flue gases may be placed in contact with a CO₂ absorbent; recovering the carbonated absorbent from the first reactor (2) and transmitting the carbonated absorbent to a combined fuel reactor and calciner (13); oxidizing a fuel in the second reactor (13) using metal oxide as an oxygen carrier and calcinating the absorbent during the fuel oxidation to remove CO₂ from the absorbent; recovering the reduced metal from the fuel reactor (13) and transmitting the metal an air reactor (17), which is supplied by air to permit re-oxidation of the metal; and recovering the absorbent from the fuel reactor (13) and transmitting the absorbent to the first reactor (2) to absorb additional CO₂ from the treated flue gases.

## Description

### FIELD

The present disclosure relates to the reduction of carbon dioxide (CO₂) emissions from flue gases. More particularly, it relates to an efficient process and system to capture CO₂ emissions from flue gases while simultaneously reducing the energy and capital expenditures necessary for CO₂ capture.

### BACKGROUND

Certain processes, such as combustion of carbon containing fuels, produce gaseous emissions of CO₂. CO₂ has been identified as a "greenhouse" gas, which appears to contribute to global warming. Because of its status as a "greenhouse" gas, technologies have been developed to prevent large quantities of CO₂ from being released into the atmosphere from the use of fossil fuels. The technologies generally fall into one of three areas: post combustion capture (PCC), where CO₂ is removed after combustion; pre-combustion (PC), where the fuel is converted before combustion; and oxy-firing combustion where, the fuel is burned in enriched or pure oxygen instead of ambient air.

Oxy-firing combustion is intended to create a more concentrated stream of CO₂ for easier capture and storage. By completing combustion in pure oxygen or oxygen enriched gas, the resultant stream of flue gases exiting the reactor generally does not include high quantities of non-reactive constituents, such as nitrogen, that would otherwise be found in the stream. By eliminating or reducing the non-reactive constituents from the flue gases, thereby increasing the CO₂ concentration of the flue stream, the energy and capital costs of capturing the CO₂ for later storage may be decreased.

Oxy-firing combustion is a different combustion process used in new combustion plant designs rather than a process for treating existing flue streams. In order to perform oxy-firing combustion, pure oxygen or oxygen enriched gas is created for injection into the fuel reactor. A drawback of oxy-firing combustion is the high energy costs necessary to generate the oxygen used in the combustion process. To address this drawback, chemical looping combustion (CLC) has been developed using metal oxides as oxygen carriers. The metal is first oxidized in an air reactor and then the oxidized metals are transmitted to a fuel reactor where they are reduced in contact with the fuel. The reduced metal is then returned to the air reactor for re-oxidation. By using a metal oxide to deliver the oxygen to the fuel reactor, combustion is accomplished in an oxygen rich atmosphere without cryogenically created oxygen rich gas. CLC may be considered an improvement upon traditional oxy-firing combustion. As with traditional oxy-firing combustion, CLC is a different combustion process rather than a process for treating existing flue gases.

Methods for PCC removal of CO₂ from existing gas streams include chemical absorption/adsorption with particular solvent systems, membrane separation, cryogenic fractionation, and/or adsorption using molecular sieves. CO₂ can be captured from a flue stream using a CO₂ absorbent by the following reaction:

Absorbent + CO₂ --> Carbonated Absorbent (carbonation) - exothermic

The absorbent is placed in contact with the flue stream containing CO₂ in a reactor, wherein the CO₂ is absorbed, forming a carbonated absorbent. The carbonated absorbent is then heated for calcination, causing the release of the CO₂ for capture and processing, and regenerating the absorbent by the following reaction:

Carbonated Absorbent-->Absorbent + CO₂ (calcination) - endothermic

This process is considered a regenerative process because the absorbent material is, to a large extent, not consumed and may be continually regenerated and cycled through the system.

US Patent No. 6,737,031 discloses an absorbent looping method employing lime (CaO) as the absorbent wherein the CaO is produced in a circulating fluidized bed hearth which has been injected with calcium carbonate (CaCO₃). The CaO is used, in part, to capture CO₂ from combustion via carbonation, forming CaCO₃. The CaO may be continually regenerated from the CaCO₃ via calcination.

One of the difficulties with absorbent looping is the substantial energy and capital expenditures incurred to regenerate the absorbent after carbonation so that the absorbent may be recycled back for additional absorption of CO₂. For example, when CaO is the absorbent, recovered CaCO₃ is calcinated in a reactor above 850° C to remove absorbed CO₂ and reform CaO. The CO₂ removed during calcination may then be recovered and captured for proper treatment. Thus, while absorbent looping may be used to capture CO₂, it requires substantial cost and energy to continually regenerate the absorbent. Accordingly, there is a need for an improved process and system for more efficient regeneration of CO₂ absorbents.

### SUMMARY

According to the aspects illustrated herein, there is provided a process for CO₂ capture from flue gases by first transmitting said the gases to a first reactor wherein the flue gases are placed in contact with an absorbent for carbonation and formation of carbonated absorbent. The carbonated absorbent is separated from the first reactor and transmitted to a second reactor. A fuel is oxidized in the second reactor using metal oxide as an oxygen carrier to deliver oxygen for the oxidation process. The carbonated absorbent is calcinated in the second reactor during the fuel oxidation to remove CO₂ from the absorbent. After combustion of the fuel, the reduced metal is separated from the flue stream of the second reactor and transmitted to a third reactor, which is an air reactor. The absorbent is also separated from the flue stream of the second reactor and transmitted to the first reactor to serve as a CO₂ absorbent again. Air is supplied to the third reactor to oxidize the metal, which after oxidation, is separated from the flue stream of the third reactor and transmitted to the second reactor.

According to other aspects illustrated herein, there is provided a method to reduce CO₂ emissions from flue gases by combusting a fuel in a fuel reactor of a chemical looping combustion system, which reactor has also been injected with a carbonated CO₂ absorbent so as to calcinate the absorbent during oxidation of the fuel. After calcination, the absorbent is extracted from the reactor and transmitted to a carbonator, which is further supplied with the flue gases so as to capture the CO₂ contained in the flue gases via carbonation. The carbonated absorbent is extracted from the carbonator and transmitted to the fuel reactor of the chemical looping combustion system to regenerate the absorbent.

According to other aspects illustrated herein, there is provided a system for CO₂ capture from flue gases comprising a first reactor receiving the flue gases for CO₂ capture in the presence of an absorbent. A second reactor is connected to the first reactor such that the carbonated absorbent from the first reactor may be transmitted to the second reactor. The second reactor further receives a fuel and a metal oxide for combustion. A third reactor is connected to the second reactor such that a reduced metal may be received from the second reactor and the metal oxide may be supplied to the second reactor. The third reactor is further connected to an air input such that the reduced metal may be oxidized in the presence of the air. The second reactor is further connected to the first reactor such that the absorbent formed during oxidation of the fuel in the second reactor may be transmitted to the first reactor.

### BRIEF DESCRIPTION OF THE DRAWINGS

Referring now the figures, which are exemplary embodiments, and wherein the like elements are numbered alike:

Figure 1 is a schematic flow diagram of an exemplary embodiment of the present disclosure.

Figure 2 is a schematic flow diagram of another exemplary embodiment of the present disclosure.

### DETAILED DESCRIPTION

According to an exemplary embodiment of the present disclosure, an efficient integrated process is provided for the reduction of CO₂ emissions. A process is provided that reduces the energy requirements of absorbent regeneration for the capture of CO₂ from flue gases. Chemical looping combustion (CLC) is utilized in a combined fuel reactor/calciner to regenerate the CO₂ absorbent used to treat the flue gases. By integrating CLC with the calcination of the absorbent looping process, the amount of oxygen required to be produced by cryogenic or other less efficient means is significantly reduced, substantially reducing the energy demands of absorbent regeneration.

According to an exemplary embodiment of the present disclosure, a system is provided for efficient capture of CO₂ from existing flue gases. A system is provided including three reactors: carbonation of the existing flue gases in the presence of a CO₂ absorbent occurring in a first reactor; production of a CO₂ absorbent occurring in a second reactor during combustion of fuel via oxygen delivered by a metal oxide; and formation of the metal oxide occurring in the third reactor via oxidation in the presence or air. The reactors may be arranged such that the carbonated absorbent created in the first reactor may be separated and transmitted to the second reactor; the absorbent created in the second reactor may be separated and transmitted to the first reactor; the reduced metal created in the second reactor may be separated and transmitted to the third reactor; and the metal oxide created in the third reactor may be separated and transmitted to the second reactor.

Embodiments of the present disclosure reduce the energy and capital costs of capturing CO₂ from flue gases by exposing CO₂ contained in the flue gases to an absorbent and then transmitting the carbonated absorbent to a combined CLC fuel reactor and calciner, which allows for the regeneration of the CO₂ absorbent during the combustion of fuel in the CLC fuel reactor. The CLC fuel reactor is, in turn, supplied by metal oxide formed in an air reactor and separated from the flue stream of the air reactor so it may be transmitted to the fuel reactor, as occurs in the CLC process. By combining the calciner and the fuel reactor into a single reactor, the ongoing calcination of the carbonated absorbent for return as an absorbent to the carbonator may be accomplished by combusting fuel with oxygen provided by a metal oxide rather than cryogenically created oxygen. The flue gases treated by the absorbent are reduced in carbon dioxide content suitable for release into the atmosphere and the gases from the flue stream of the fuel reactor are primarily CO₂ thereby simplifying the process of capture and storage of the CO₂. Thus, embodiments of the present disclosure substantially reduce the energy and capital costs typically associated with CO₂ capture using a CO₂ absorbent.

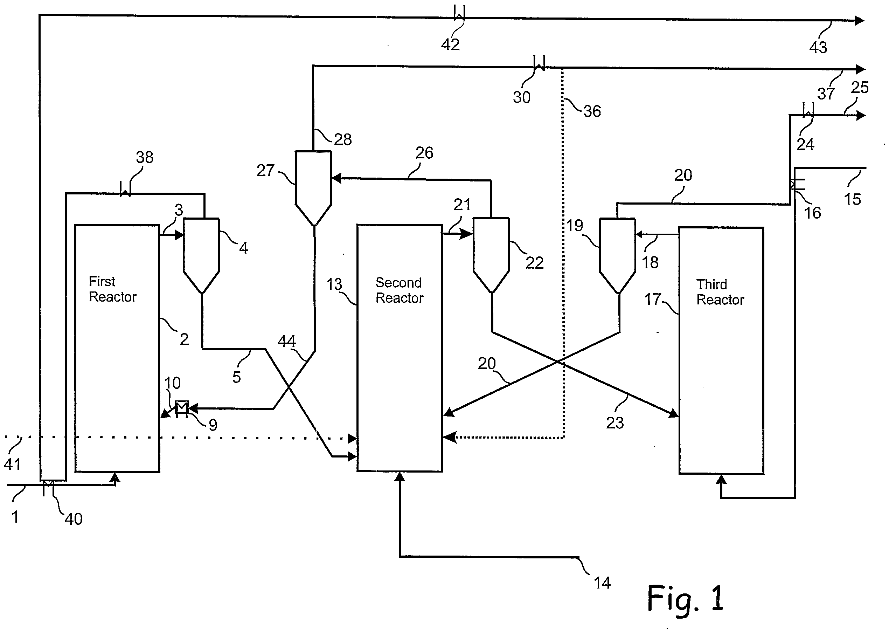

Referring to the exemplary embodiment shown in Fig. 1, flue gases **1** are transmitted to a first reactor **2** (carbonator) wherein the flue gases are put into contact with the an absorbent **10** so as to capture CO₂ contained the flue gases by carbonization. The first reactor may be a fluidized bed operating at a temperature range of approximately 400° C to approximately 800° C, typically approximately 650° C. In one embodiment, the flue gases are exposed to a first heat exchange **40** with a flue stream exiting a first separator **4** of the first reactor **2,** allowing for a change of temperature of the flue gases before entering the first reactor **2**.

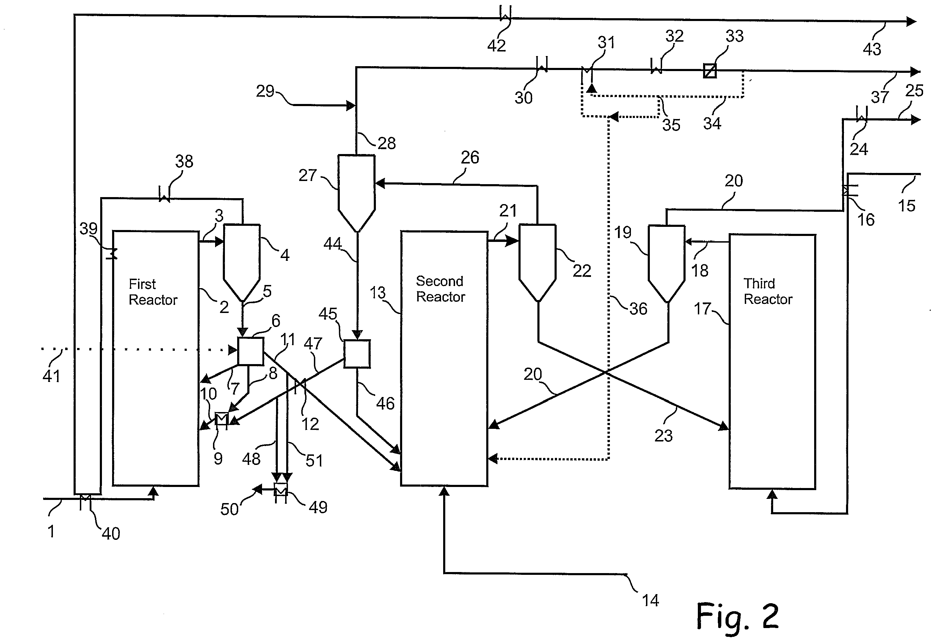

Solids present in a flue stream**3**xiting the first reactor **2** may be extracted in the first separator **4**. In one embodiment, separated solids **5** are transmitted to a second reactor **13** (combined calciner/fuel reactor), which may be a fluidized bed reactor. In another embodiment, e.g. as shown in Fig. 2, the solids **5** exiting the first separator **4** are transmitted via a first loop seal **6** wherein a portion of the solids **7** may be returned to the first reactor **2,** a portion of the solids **8** may be transmitted to a second heat exchange **9** to capture some of the heat generated by carbonation and reduce the temperature of the solids **8** before the solids are returned **10** to the first reactor **2,** and a portion of the solids **11** may be transmitted to the second reactor **13.** Optionally, an embodiment may include a third heat exchange **12** from solids leaving the second reactor **47** with the solids **11** transferred from the first reactor **2** to the second reactor **13**. The heat exchange between streams **47** and **11** reduces the necessary fuel consumption in the combined calciner/fuel reactor. The portion of the solids **8** transmitted to the second heat exchanger **9** may then be returned to first reactor **2** after being further cooled **10.**

In one embodiment, the first reactor **2** may be directly subjected to a fourth heat exchange **39,** thereby permitting the capture of heat for energy generation while controlling the temperature of the first reactor **2.**

As shown in Fig. 1, upon leaving the first separator **4,** the CO₂ reduced flue stream may go through a fourth heat exchange **38** before transmitting via the heat exchange pathway **40** with the flue gases **1,** and then go through a sixth heat exchange **42** before being released to the atmosphere via an exhaust stack **43.**

The solids **5** separated from a flue stream **3** of the first reactor **2** are transmitted to a second reactor **13.** Initial carbonated absorbent **41** may be added to the second reactor **13** for calcination. In an alternative embodiment, e.g. as shown in Fig. 2, the initial carbonated absorbent **41** may be added to the first loop seal **6** before being transmitted to the second reactor **13,** permitting the initial carbonated absorbent **41** to be heated by the particle flows exiting the first separator **4** before entering the second reactor **13.** Optionally, the carbonated absorbent may pass through first reactor **2** for preheating. Because calcination of the absorbent is endothermic, increasing the temperature of the carbonated absorbent **41** before entry into the second reactor **13** reduces the energy demands required of the CLC combustion process in order to obtain sufficient calcination temperatures.

The second reactor **13** may be further injected with a fuel **14** and a metal oxide **20** generated in a third reactor **17,** the third reactor being an air reactor. One example of the fuel is coal. Other examples include, but are not limited to natural gas, synthetic gas (syngas), and petroleum refinery gas. The metal oxide employed may be any of the typical metal oxides used for CLC, including nickel oxide, calcium oxide, iron oxide, copper oxide, manganese oxide, cobalt oxide and mixtures hereof as examples. The combustion of the fuel by oxygen provided by the metal oxide occurs in the second reactor, which may operate at a temperature above approximately 850° C or other selected temperate range as appropriate for calcination of the chosen absorbent. In the presence of the combustion temperatures of the second reactor, calcination of the absorbent occurs, regenerating the absorbent and causing the release of CO₂. Additional CO₂ is also emitted by the oxidation products of the fuel **14.**

Solids contained in a flue stream **21** of the second reactor **13** are extracted in a multi-stage separation system. A second separator **22,** separates out a reduced metal **23** so it may be transmitted to the third reactor/air reactor **17.** In the third reactor **17,** the reduced metal may be contacted with air input **15,** which may be heated via a seventh heat exchange **16** with a flue stream of the third reactor **17** before entering the third reactor. In the third reactor **17,** the reduced metal may be re-oxidized by oxygen contained in the air. The metal oxides may be extracted from the flue stream **18** of the third reactor **17** in a fourth separator **19** and transmitted **20** back to the second reactor **13** where metal oxides release oxygen that reacts with the fuel **14** in the second reactor **13.** A flue stream **20** leaving the fourth separator **19** may be transmitted such that the seventh heat exchange **16** occurs with the incoming air **15** for the third reactor **17** and may be further cooled by an eighth heat exchange **24** before the oxygen depleted air may be released to the atmosphere via an exhaust stack **25.**

A third separator **27** may be fed via a flue stream **26** from the second separator **22.** As shown in Fig. 1, solids **44** separated by the third separator **27** may be transmitted to the second heat exchanger **9** for capture of the heat as energy and to reduce the temperature of the solids before injecting the solids **10** back into the first reactor **2.** The solids **44** separated by the third separator **27** may be a mixture of carbonated absorbent and absorbent. The absorbent being injected into the first reactor **2** may again be placed in contact with the CO₂ containing flue gases 1 for further carbonization and CO₂ capture, thereby completing the recycling of the CO₂ absorbent.

Referring now to the exemplary embodiment shown in Fig. 2, the solids **44** from the third separator **27** may be transmitted via a second loop seal **45** wherein a portion of the solids **46** may be returned to the second reactor **13** and a portion of the solids **47** may be transmitted to the first reactor **2.** Prior to transmission to the first reactor **2,** the solids **47** may be subjected to intermediate cooling in the second and third heat exchangers **9** and **12.** In one embodiment, a portion **48** of the solids **47** transmitted from the second loop seal **45** to the first reactor **2** may be transmitted to a ninth heat exchange **49** and solids **50,** which may be a composite of absorbent and carbonated absorbent, may be recovered for storage or use in other systems. In another embodiment, a portion **51** of the solids **11** transmitted from the first loop seal **6** to the second reactor **13** may be transmitted to the ninth heat exchange **49.**

As shown in Fig. 1, a flue stream **28** of the third separator **27** may be transmitted via a tenth heat exchange **30** before the CO₂ rich stream may be sent to a gas processing unit **37** for CO₂ capture and processing. In one embodiment, a portion **36** of the flue stream **28** may be returned to the second reactor **13** for fluidization purposes.

As shown in Fig. 2, in one embodiment, enriched or pure oxygen may be added to the flue stream of the third separator to ensure complete combustion of the fuel added to the second reactor **14.** Because the CLC process may leave a fraction of the fuel **14** incompletely oxidized as it exits the second reactor **13,** the additional oxygen **29** ensures complete combustion before the flue stream is transmitted to the gas processing unit. The additional oxygen **29** may constitute less than 10% of the oxygen necessary to fully oxidize the fuel, meaning that the CLC process provides over 90% of the oxygen required for the fuel combustion, which takes place in the combined fuel reactor/calciner **13** while simultaneously providing the heat required for the endothermic calcination of the absorbent.

In a further embodiment, a portion **34** of the flue stream **28** from the third separator **27,** after further combustion in the presence of the additional oxygen **29** and intermediate cooling via the tenth heat exchange **30** may be recycled, with a portion **35** of the recycled flue being transmitted via an eleventh heat exchange **31** with the flue stream **28** before the flue stream has been further cooled by a twelfth heat exchange **32** for transmission to a de-duster **33.** In this configuration, the reheated portion **35** of the recycled flue stream may be mixed with a portion **34** of the recycled flue stream that is not reheated before transmission **36** back to the second reactor. By recycling the flue stream and heating a portion of the recycled flue stream before transmission back to the second reactor, optimum temperatures of the second reactor **13** can more accurately be maintained.

The integration of a fuel reactor and a calciner into a single reactor reduces the energy requirements necessary for the production of CO₂ absorbent to treat the existing flue gases. This process leads to the treatment of mixed flue gases, resulting in CO₂ reduced flue gases that can be released to the atmosphere, and a separate CO₂ rich flue stream that can be separately transmitted to a gas processing unit for CO₂ capture and storage. Thus, aspects of the present disclosure provide an integrated process for the treatment of existing CO₂ emissions while minimizing the impact of additional CO₂ absorbent generation and substantially reducing the capital and energy requirements typically required for the regeneration of a CO₂ absorbent of a regenerative absorbent cycle.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teaching of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A process for carbon dioxide (CO₂) capture from flue gases, comprising:
transmitting the flue gases to a first reactor (2);
injecting an absorbent into the first reactor (2);
absorbing CO₂ from the flue gases by placing the flue gases in contact with the absorbent such that a carbonated absorbent is formed;
separating the carbonated absorbent from a flue stream of the first reactor (2);
transmitting the carbonated absorbent to a second reactor (13);
injecting a fuel into the second reactor (13);
injecting an oxidized metal into the second reactor (13);
oxidizing the fuel in the second reactor (13) using oxygen supplied by the oxidized metal such that a reduced metal is formed;
calcining the carbonated absorbent in the second reactor (13) during the oxidation of the fuel such that CO₂ is removed from the absorbent;
separating first from a flue stream of the second reactor (13) the reduced metal;
transmitting the reduced metal to a third reactor (17);
separating second from the flue stream of the second reactor (13) the absorbent;
transmitting the absorbent to the first reactor (2);
injecting air into the third reactor (17);
forming oxidized metal in the third reactor (17) by placing the reduced metal in contact with the air;
separating the oxidized metal from a flue stream of the third reactor (17); and
transmitting the oxidized metal to the second reactor (13).

2. The process of claim 1, further comprising: adding an oxygen enriched gas to the flue stream of the second reactor (13) to complete combustion of the fuel.

3. The process of any one of the preceding claims, further comprising: recycling a portion of the flue stream of the second reactor (13) for fluidization use.

4. The process of any one of the preceding claims, further comprising: transmitting the flue stream of the second reactor (13) to a gas processing unit (37) for CO₂ capture and storage.

5. The process of any one of the preceding claims, wherein the absorbent is lime.

6. The process of any one of the preceding claims, further comprising: preheating the carbonated absorbent by heat exchange with the flue stream of the second reactor (13).

7. The process of any one of the preceding claims, wherein the reactors (2, 13, 17) are fluidized bed reactors.

8. The process of any one of the preceding claims, further comprising: preheating the carbonated absorbent being transmitted to the second reactor (13) from the first reactor (2) by a heat exchange from the absorbent being transmitted to the first reactor (2) from the second reactor (13).

9. The process of any one of the preceding claims, further comprising: initially injecting the carbonated absorbent into the first reactor (2) whereby the carbonated absorbent is preheated before transmission to the second reactor (13).

10. A method to reduce carbon dioxide (CO₂) emissions from flue gases, comprising:
combusting a fuel in a fuel reactor (13) of a chemical looping combustion system;
injecting into the fuel reactor (13) of the chemical looping combustion system a carbonated absorbent such that the carbonated absorbent is calcinated forming an absorbent during oxidation of the fuel;
extracting, in a separator (4), the absorbent from a flue stream of the fuel reactor (13) of the chemical looping combustion system;
transmitting the absorbent to a carbonator (2);
transmitting the flue gases to the carbonator (2);
capturing CO₂ from the flue gases by placing the flue gases in contact with the absorbent such that carbonation occurs forming the carbonated absorbent;
separating the carbonated absorbent from a flue stream of the carbonator (2); and
transmitting the carbonated absorbent to the fuel reactor (13) of the chemical looping combustion system.

11. The method of claim 10, in which the carbonated absorbent is calcium carbonate.

12. The method of any one of claims 10-11, in which the reactors (2, 13) are fluidized bed reactors.

13. The method of any one of claims 10-12, further comprising: intermediate cooling of the flue gases before transmission to the carbonator (2).

14. A system for CO₂ capture from flue gases, **characterized by** a first reactor (2);
a second reactor (13) connected to the first reactor (2); and
a third reactor (17) connected to the second reactor (13);
wherein the first reactor (2) receives an absorbent from the second reactor (13) and further receives the flue gases such that CO₂ capture by carbonation occurs in the presence of the absorbent, forming a carbonated absorbent;
wherein the second reactor (13) receives a fuel and a metal oxide for combustion and further receives the carbonated absorbent such that calcination occurs during combustion forming the absorbent;
wherein a reduced metal is transmitted from the second reactor (13) to a third reactor (17);
wherein the third reactor (17) is further connected to an air input (15) such that the reduced metal may be oxidized; and
wherein the metal oxide is transmitted from the third reactor (17) to the second reactor (13).

15. The system of claim 14, wherein the second reactor (13) is connected to two solid separators (22, 27).

16. The system of any one of claims 14-15, wherein a first solid separator (22) separates the reduced metal from a flue stream of the second reactor (13) and transmits the reduced metal to the third reactor (17).

17. The system of any one of claims 14-16, wherein the second separator (22) separates the absorbent from a flue stream of the second reactor (13) and transmits the absorbent to the first reactor (2).

18. The system of any one of claims 14-17, wherein the third reactor (17) is connected to a solid separator (19) that separates the metal oxide from a flue stream of the third reactor (17) and transmits the metal oxide to the second reactor (13).

19. The system of any one of claims 14-18, wherein the first reactor (2) is connected to a solid separator (4) that separates the carbonated absorbent from a flue stream of the first reactor (2) and transmits the carbonated absorbent to the second reactor (13).

20. The system of any one of claims 14-19, further comprising: transmission of the absorbent from the second reactor (13) such that a heat exchange occurs with the carbonated absorbent entering the second reactor (13) preheating the carbonated absorbent.
